# EUROPÄISCHE PATENTANMELDUNG

(11) **EP 0 546 219 A1**
(43) Veröffentlichungstag der Anmeldung: **16.06.1993**
(21) Anmeldenummer: 91121424.5
(22) Anmeldetag: 13.12.1991
(51) Int. Cl.: G01M 9/00, G01M 9/06

(54) **Pyramidenwaage zum Bestimmen von Kräften und Momenten**

(71) Anmelder: CARL SCHENCK AG, D-64273 Darmstadt (DE)
(72) Erfinder: Polansky-Schmülling-Ziegert, Lubomir, Ing., W-6944 Hemsbach (DE)

(57) **Zusammenfassung**

Es wird eine Pyramidenwaage mit einer Momentenmeßebene (1) und einer mit dieser gelenkig verbundenen Kraftmeßebene (5) vorgeschlagen. Zur exakten Bestimmung der Auftriebskraft (F_{z}) ist vorgesehen, daß zwei in nicht parallelen Ebenen senkrecht zur Momentenmeßebene (1) liegende Entkopplungsdreiecke (17, 21), die jeweils über eine erste Parallellenkeranordnung (19 bzw. 23) mit der Kraftmeßebene (5) und über eine zweite Parallellenkeranordnung (18, 22, 22a) mit dem Fundament verbunden sind, zur statisch bestimmten Lagerung der Kraftmeßebene (5) vorgesehen sind.

## Beschreibung

Die Erfindung betrifft eine Pyramidenwaage nach dem Oberbegriff des Patentanspruches 1.

Eine Pyramidenwaage dieser Gattung ist aus der DE 38 20 680 A1 bekannt. Diese Windkanalwaage weist eine als Dreieck-Rahmen ausgeführte horizontal verlaufende Momentenmeßebene auf, welche über drei Gelenkstützen mit der Kraftmeßebene verbunden ist. Die Kraftmeßebene stützt sich in vertikaler Richtung über drei und in horizontaler Richtung über zwei Wägezellen am Fundament ab. Zur Momentenerfassung ist die Momentenmeßebene über drei weitere Wägezellen abgestützt.

Zwar lassen sich mit dieser Pyramidenwindkanalwaage aufgrund der entkoppelten Meßebenen das Nick-, Roll- und Giermoment sowie die horizontalen Kräfte, d. h. die Widerstands- und Seitenkraft mit sehr hoher Genauigkeit ermitteln, die Auftriebskraft hingegen läßt sich aufgrund parasitärer Meßanteile, welche durch die vertikale Dreipunktlagerung bedingt sind, nur mit verminderter Meßgenauigkeit bestimmen.

Der Erfindung liegt daher die Aufgabe zugrunde, eine gattungsgemäße Pyramidenwaage zu schaffen, welche sich durch eine besonders hohe Meßgenauigkeit sämtlicher am Prüfling angreifender Kräfte und Momente auszeichnet. Darüber hinaus soll diese Pyramidenwaage auf besonders kostengünstige Weise herstellbar sein und einen einfachen Aufbau aufweisen.

Diese Aufgabe wird durch die kennzeichnenden Merkmale des Anspruches 1 gelöst. Durch diese erfindungsgemäße Lösung läßt sich die Pyramidenwaage in vertikaler Richtung auf nur einer einzigen Wägezelle lagern, was zu einer exakten Auftriebsermittlung führt. Gleichzeitig werden gegenüber der bekannten Pyramidenwaage zwei Wägezellen eingespart.

Beim Einsatz der erfindungsgemäßen Pyramidenwaage als Windkanalwaage, interessieren in der Regel die auf die karthesischen Raumkoordinaten bezogenen Kräfte und Momente, so daß bei einer bevorzugten Ausführungsform der Erfindung vorgesehen ist, daß die beiden Ebenen senkrecht aufeinander stehen. Ferner sollte zur einfachen Ermittlung der interessierenden Kräfte die Abstützung der Kraftmeßebene am Fundament mittels dreier aufeinander senkrecht stehender Gelenkstützen erfolgen. Die Achsen der drei die Kräfte messenden Wägezellen sollten senkrecht aufeinander stehen und sich in einem senkrecht unter dem virtuellen Zentrum liegenden Punkt in der Kraftmeßebene schneiden.

Weiterhin ist es für eine einfache und exakte Messung von Vorteil, wenn eine der Gelenkstützen zwischen der Kraftmeßebene und dem Fundament koaxial zum Lot durch das virtuelle Zentrum auf die Momentenmeßebene verläuft, und daß die beiden anderen Gelenkstützen in einer gemeinsamen, senkrecht zur erstgenannten Gelenkstütze verlaufenden Ebene liegen. Darüber hinaus sollte die Abstützung der Momentenmeßebene auf der Kraftmeßebene zur Momentenbestimmung über zwei senkrecht zueinander angeordnete Gelenkstützen erfolgen, die in einer gemeinsamen parallel zur Momentenmeßebene verlaufenden Ebene liegen. Eine besonders stabile Lagerung der Kraftmeßebene erhält man, wenn die Entkopplungsdreiecke als Tetraeder ausgebildet sind.

Da mit der erfindungsgemäßen Pyramidenwaage sämtliche an einem Prüfkörper angreifenden Belastungen absolut exakt gemessen werden können, eignet sie sich besonders zur Verwendung als Kalibriervorrichtung für interne Windkanalwaagen und Mehrkomponentenaufnehmer.

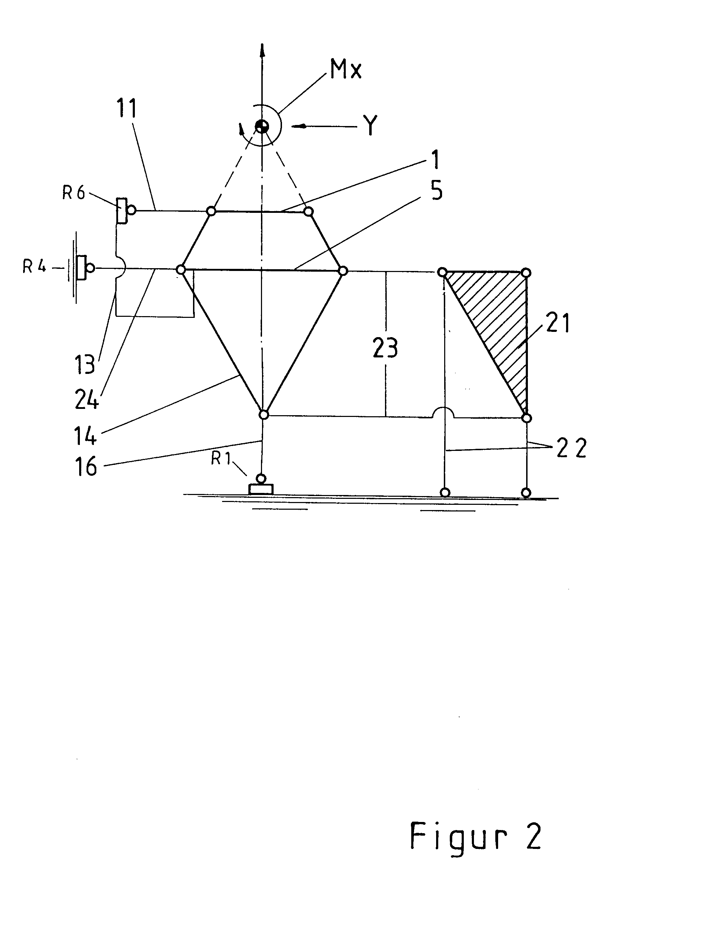

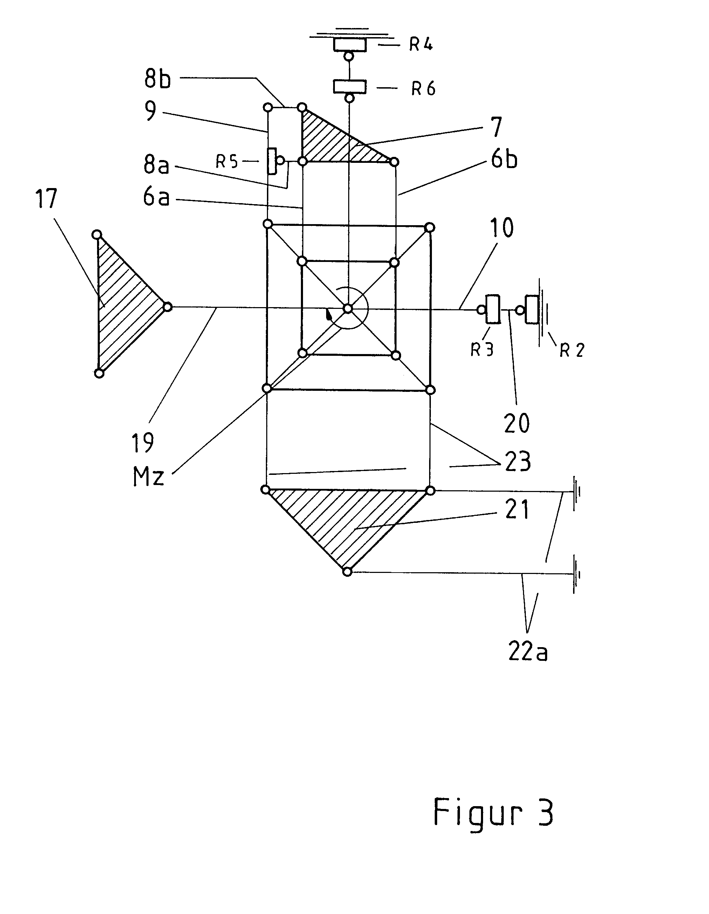

Weitere vorteilhafte Merkmale sowie Funktion und Aufbau der Erfindung ergeben sich aus der nachstehenden Beschreibung eines Ausführungsbeispiels anhand der Zeichnung. Hierzu zeigt Figur 1 und 2 jeweils eine Seitenansicht und Figur 3 die zugehörige Draufsicht einer erfindungsgemäßen Pyramidenwaage.

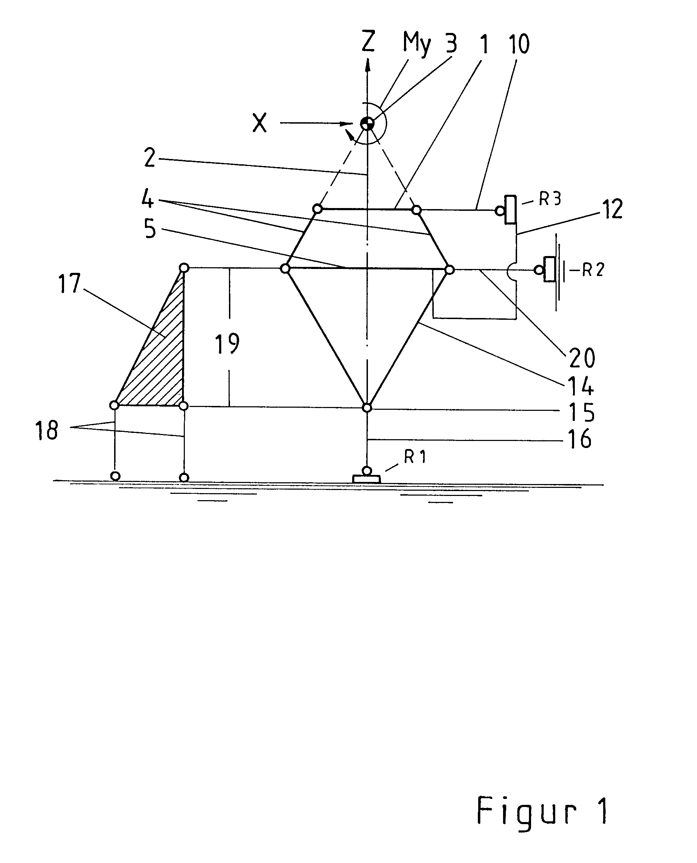

Wie insbesondere Figur 1 zu entnehmen ist, besitzt die Pyramidenwaage eine Momentenmeßebene 1, welche mittels der zentral und senkrecht auf ihr vorgesehenen Stange 2 mit einem nicht dargestellten Prüfkörper verbindbar ist. Die Verbindung zwischen der Stange 2 und dem Prüfkörper erfolgt im sogenannten virtuellen Zentrum oder Bezugspunkt 3. Die Momentenmeßebene 1 weist eine quadratische Form auf und kann beispielsweise als Rahmen- oder Blechkonstruktion ausgeführt sein. Die Momentenmeßebene 1 ist über 4 Gelenkstützen 4 gelenkig mit der Kraftmeßebene 5 verbunden. Die Kraftmeßebene 5 besitzt ebenfalls eine quadratische Form, jedoch mit größerer Kantenlänge als die Momentenmeßebene 1; beide sind horizontal ausgerichtet, sind symmetrisch zur vertikalen Z-Achse und ihre Kanten verlaufen parallel zueinander. Die Gelenkstützen 4 sind jeweils an einander zugewandten Ecken der beiden Meßebenen 1 und 5 angelenkt, wobei sie so zueinander ausgerichtet sind, daß sich ihre Längsachsen im Bezugspunkt 3 schneiden.

Zur Entkoppelung des Giermomentes M_{z} um die Z-Achse ist die Momentenmeßebene 1 mittels einer Parallellenkeranordnung 6a, 6b mit dem Giermomententkopplungsdreieck 7 verbunden, welches so angeordnet ist, daß es sich innerhalb einer gemeinsamen Horizontalebene mit der Momentenmeßebene 1 befindet. An der gleichen Ecke des Giermomententkopplungsdreiecks 7, an welcher der Lenker 6a angreift, greift auch der Lenker 8a einer weiteren Parallellenkeranordnung 8a, 8b an, welche sich an einem biegesteif mit der Kaftmeßebene verbundenen Arm 9 abstützt. Dabei ist zwischen den Arm 9 und den Lenker 8a eine Wägezelle R5 zur Bestimmung des Giermomentes M_{z} geschaltet.

Zur Bestimmung des Nickmomentes My und des Rollmomentes Mₓ stützt sich die Momentenmeßebene 1 über zwei horizontal und rechtwinklig zueinander verlaufende Gelenkstützen 10 und 11 jeweils an einem starr mit der Kraftmeßebene verbundenen Aufnahmeteil 12 bzw. 13 ab.

Zur Bestimmung des Nickmomentes ist zwischen die Gelenkstütze 10 und das Aufnahmeteil 12 die Wägezelle R3 geschaltet, während zwischen die Gelenkstütze 11 und das Aufnahmeteil 13 die Wägezelle R6 zur Bestimmung des Rollmomentes Mₓ eingesetzt ist.

Von den vier Ecken der Kraftmeßebene 5 führen symmetrisch zur Z-Achse vier Streben 14 spitzwinklig nach unten, welche biegesteif mit der Kraftmeßebene 5 verbunden sind. Diese Streben 14 treffen sich in der Spitze 15, an welcher sich die Gelenkstütze 16, die auf der Wägezelle R1 gelagert ist, angelenkt ist. Die Gelenkstütze 16 ist koaxial zur Z-Achse angeordnet. Die Wägezelle R1 stützt sich am Fundament ab und dient somit der Bestimmung der Auftriebskraft F_{z}.

Ein Nickmomententkopplungstetraeder 17 ist in der X-Z-Ebene ausgerichtet und über eine erste aus zwei Lenkern 18 bestehende Parallellenkeranordnung mit dem Fundament und über eine zweite Parallellenkeranordnung 19, die ebenfalls zwei Lenker aufweist, mit der Kraftmeßebene 5 bzw. der Spitze 15 verbunden. Die beiden Parallellenkeranordnungen 18 und 19 verlaufen senkrecht zueinander und liegen ebenfalls innerhalb der X-Z-Ebene. Gleichfalls innerhalb der X-Z-Ebene befindet sich die horizontal ausgerichtete Gelenkstütze 20, die sich zur Bestimmung der Widerstandskraft Fₓ über die Wägezelle R2 auf dem Fundament abstützt.

In der Y-Z-Ebene verläuft der Roll- und Giermomententkopplungstetraeder 21, welcher ähnlich wie der Nickmomententkopplungstetraeder 17 mittels dreier senkrecht zueinander verlaufenden Parallellenkeranordnungen 22, 22a und 23 einerseits mit dem Fundament und andererseits mit der Kraftmeßebene 5 verbunden ist. Die drei Parallellenker 23 verlaufen in Y-Richtung, wobei die beiden oberen Lenker an der Kraftmeßebene 5 und der untere an der Spitze 15 angelenkt sind. Die Verbindung zwischen dem Fundament und dem Roll- und Giermomententkopplungstetraeder 21 erfolgt zum einen durch die beiden in Z-Richtung verlaufenden Lenker 22 und zum anderen durch die Lenker 22a, die beide parallel zu der X-Achse verlaufen. Die in Y-Richtung ausgerichtete Gelenkstütze 24, welche sich zur Aufnahme der Seitenkraft Fy über die Wägezelle R4 am Fundament abstützt, schneidet die Y-Achse im Zentrum der Kraftmeßebene.

Die Pyramidenwaage ist somit statisch bestimmt gelagert und jede der sechs Wägezellen ist genau einer Belastungskomponente zugeordnet. Somit entstehen keine Probleme mit durch Kräfte- überlagerungen bedingten Meßfehlern.

## Patentansprüche

1. Pyramidenwaage zum Bestimmen von Kräften und Momenten mit einer Momentenmeßebene (1), mit welcher ein im virtuellen Zentrum (3) der Pyramidenwaage angeordneter Prüfling verbindbar ist, einer mit der Momentenmeßebene (1) über Gelenkstützen (4) verbundenen Kräftemeßebene (5), wobei die Längsachsen der Gelenkstützen (4) durch das virtuelle Zentrum (3) verlaufen, mit gelenkigen Abstützungen (16 bis 24) der Kraftmeßebene an einem Fundament, in deren Kraftfluß Kraftaufnehmer (R1, R2, R4) angeordnet sind, und mit einem über zwei Parallellenkeranordnungen (6a, 6b, 8a, 8b) zwischen der Kraft- und Momentenmeßebene (5, 4) angelenkten Entkopplungsdreieck (7) zur entkoppelten Abstützung des Momentes (M_{z}), um das Lot von dem virtuellen Zentrum (3) auf die Momentenmeßebene (1), dadurch gekennzeichnet, daß zwei in zueinander nicht parallelen Ebenen senkrecht zur Momentenmeßebene (1) liegende Entkopplungsdreiecke (17, 21), die jeweils über eine erste Parallellenkeranordnung (19 bzw. 23) mit der Kraftmeßebene (5) und über mindestens eine zweite Parallellenkeranordnung (18 bzw. 22, 22a) mit dem Fundament verbunden sind, zur statisch bestimmten Lagerung der Kraftmeßebene (5) vorgesehen sind.

2. Pyramidenwaage nach Anspruch 1, dadurch gekennzeichnet, daß die beiden Ebenen (X-Z-und Y-Z-Ebene) senkrecht aufeinander stehen.

3. Pyramidenwaage nach einem der vorhergehenden Ansprüche, dadurch gekennzeichnet, daß die Abstützung der Kraftmeßebene (5) am Fundament mittels dreier senkrecht zueinander verlaufender Gelenkstützen (16, 20, 24) erfolgt.

4. Pyramidenwaage nach Anspruch 3, dadurch gekennzeichnet, daß eine der Gelenkstützen (16) zwischen der Kraftmeßebene (5) und dem Fundament koaxial zum Lot durch das virtuelle Zentrum (3) auf die Momentenmeßebene (1) verläuft, und daß die beiden anderen Gelenkstützen (20, 24) in einer gemeinsamen, senkrecht zur erstgenannten Gelenkstütze (16) verlaufenden Ebene liegen.

5. Pyramidenwaage nach einem der vorhergehenden Ansprüche, dadurch gekennzeichnet, daß zur Abstützung der Momentenmeßebene (1) auf der Kraftmeßebene (5) zwei senkrecht zueinander angeordnete Gelenkstützen (10, 11) vorgesehen sind, die in einer gemeinsamen parallel zur Momentenmeßebene (1) verlaufenden Ebene liegen.

6. Pyramidenwaage nach einem der vorhergehenden Ansprüche, dadurch gekennzeichnet, daß die Entkopplungsdreiecke (17, 21) als Tetraeder ausgebildet sind.

7. Pyramidenwaage nach einem der vorhergehenden Ansprüche, gekennzeichnet durch die Verwendung als Kalibriervorrichtung für interne Windkanalwaagen und andere Mehrkomponentenaufnehmer.
